# EUROPEAN PATENT SPECIFICATION

(11) **EP 0 640 255 B1**
(45) Date of publication and mention of the grant of the patent: **13.10.1999**
(21) Application number: 93910455.0
(22) Date of filing: 05.05.1993
(51) Int. Cl.: H02J 17/00, B60L 9/00, B60L 9/08

(54) **A PRIMARY INDUCTIVE PATHWAY**
GLEIS MIT INDUKTIVEM PRIMÄRKREIS
TRAJET INDUCTIF PRIMAIRE

(30) Priority: 10.05.1992 NZ 24138092; 10.06.1992 NZ 24310292; 22.02.1993 NZ 24595593; 22.02.1993 NZ 24595893; 26.03.1993 NZ 24726893
(43) Date of publication of application: 01.03.1995
(73) Proprietor: AUCKLAND UNISERVICES LIMITED, Auckland 1001 (NZ); DAIFUKU CO., LTD., Osaka 555 (JP)
(72) Inventor: NISHINO, Shuzo 2-11, 3-chome, Nishiyodogawa-ku Osaka 555 (JP); BOYS, John, Talbot 15A Island Bay Road, Auckland 1310 (NZ)
(74) Representative: Spoor, Brian
(86) International application number: NZ9300032
(87) International publication number: WO9323909

(56) References cited:
- EP-A- 0 289 868
- WO-A-91/17929
- AU-A- 1 237 392
- US-A- 5 125 347
- CONFERENCE RECORD OF THE 1991 IEEE INDUSTRY APPLICATIONS SOCIETY ANNUAL MEETING, vol.1, 28 September 1991, USA pages 1263 - 1269 K.KLONTZ ET AL 'CONTACTLESS POWER DELIVERY SYSTEM FOR MINING APPLICATIONS'
- 40th IEEE Vehicular Technology Conference, 6 May 1990, Orlando, Florida, pages 100-104; MANOCHEHR EGHTESADI: "Inductive Power Transfer to an Electrical Vehicle-Analytical Model".

## Description

### TECHNICAL FIELD OF THE INVENTION

This invention relates to power distribution systems, particularly those using inductive power transfer from high frequency resonant currents within the primary conductors, and more particularly to modular resonant magnetic field emitter units.

### BACKGROUND

Long-standing problems exist in the conventional transfer of electric power to self-powered moving vehicles. Those having a sliding brush rubbing along a fixed current-carrying conductive rail exhibit wear, dust production, intermittent loss of electrical contact, sparking, and electric shock hazards. Vehicles lacking the guidance of weight-bearing rails are particularly prone to wander away from a defined route and are then likely to lose electrical contact with a supply conductor.

Inductive power distribution systems overcome many of the problems by using the alternating magnetic field surrounding a fixed primary conductor to induce current in a secondary conductor at some distance from the primary conductor, thereby avoiding direct contact. They are particularly suited to providing motive power.

The use of high-frequency resonating currents within primary and secondary conductors has greatly improved the efficiency of inductive power distribution, and recent developments in semiconductor technology have permitted the application of improved inductive power systems as have been described by Boys & Green in WO 92/17929)

EP A 0 289 868 describes an electrical modular roadway system adapted for transmitting power to and controlling inductively coupled vehicles travelling thereon. The system comprises a plurality of elongated, electrically connected inductor modules arranged in an aligned end-to-end and spaced apart in order to form a continuous vehicle path. Each module has a magnetic core and power windings which generate a magnetic field extending above the road surface. Controllable relays are connected between modules for allowing operating electric current either to activate or bypass selected modules. Sensing windings in modules are activated by the presence of a vehicle on one module to provide control signals to relays for other modules.

A paper entitled "Contactless Power Delivery System for Mining Applications" by K Klontz et al (Conference Record of the 1991 IEEE Industry Applications Society Annual Meeting, Volume 1, 28 September 1991, USA, pages 1263-1269) describes a primary inductive pathway for a resonant inductive power distribution system, the pathway comprising several primary conductor modules.

Resonant inductive power transfer systems been hampered by the difficulty of driving long tracks with sufficient power. Although a track of a given length can be supplied with more power simply by using higher voltages, reasonable safety requirements maybe exceeded, and the ratings of presently available electronic components used in the power supply will generally be exceeded with output voltages above 600V.

A further drawback of such systems is the risks to health understood to be caused by strong magnetic fields radiated by current-carrying conductors; risks that have resulted in stringent field strength guidelines being adopted. Delivery of realistic amounts of energy for motive power purposes is usually likely to breach these restrictions.

### OBJECT

It is an object of the present invention to go some way towards providing an improved and safer inductive power transportation system, or at least to provide the public with a useful choice.

### STATEMENT OF INVENTION

Accordingly the present invention provides a primary inductive pathway for a resonant inductive power distribution system, said pathway being capable of connection to a source of power capable of generating alternating current at a system frequency;
wherein:
said pathway has a resonant frequency compatible with a said system resonant frequency;
characterised in that
said pathway comprises at least two primary conductor modules each having a resonant frequency compatible with the system resonant frequency;
wherein each said primary conductor module comprises a first and a second conducting means mounted in parallel and spaced apart configuration;
and wherein:
each conducting means of each said module has connection means capable of connection to adjoining conducting means within adjacent primary conductor modules so that a number of modules can be joined together to form a longer primary inductive pathway;
and each said primary conductor module includes at least one resonating capacitor connected in series with respective conducting means.

Other aspects of the invention are set out in more detail in the claims.

### DRAWINGS

The following is a description of preferred forms of the invention, given by way of example only, with reference to the accompanying diagrams.
- Fig 1:: is an illustration showing a prior-art conductor for an energised track.
- Fig 2:: is a circuit diagram of a lumped-component equivalent to a shorted track ending.
- Fig 3a:: is a circuit diagram comparable to Fig 2; realised with track components (for a distributed inductance) and discrete capacitances.
- Figs 3b and 3c: describe methods for capacitor voltage rating reduction.
- Fig 3d:: is a circuit diagram of a closed resonant circuit of two inductors and two capacitors, having a zero-inductance cable joining nodes of the same phase and amplitude.
- Fig 3e:: is a circuit diagram of a resonant circuit of two inductors and two capacitors, having a zero-inductance cable joining nodes of the same phase and amplitude, and adapted to form a series-connected module of a resonant primary pathway.
- Fig 4a:: is a circuit diagram illustrating a series of modules each comprising two discrete capacitances with distributed inductance within unit lengths of track conductors, to lengthen a track.
- Fig 4b:: is a circuit diagram illustrating a series of modules each comprising one, alternated, discrete capacitance together with distributed straight-wire inductance within unit lengths of track conductors, to lengthen a track.
- Fig 4c:: is a circuit diagram illustrating a series of modules each comprising two discrete capacitances with distributed inductance within unit lengths of track conductors, and individual lengths of zero-inductance cable, used to lengthen a track while restricting possible modes of oscillation.
- Fig 4d:: is a circuit diagram illustrating a series of modules each comprising two discrete capacitances with distributed inductance within unit lengths of track conductors, and a single length of zero-inductance cable, used to lengthen a track while restricting possible modes of oscillation.
- Fig 4e:: illustrates the electrical components comprising a single module and including a zero-inductance cable as for Fig 3e.
- Fig 4f:: illustrates a section through the primary conductors and the substrate (conveyer style)
- Fig 4g:: illustrates a section through the primary conductors embedded in a substrate such as a floor.
- Fig 4h:: illustrates the interconnection at the beginning and end of a looped primary conductor.
- Fig 5: is a section through a pair of toroidal cores surrounding a pair of conductors, used to compensate the resonant frequency of non-standard lengths of track by simulating non-existent lengths.
- Fig 6a:: illustrates a rail mounting cross section (6a), in which a conducting sheath serves to shield an underlying iron fishplate and minimise eddy currents within it.
- Fig 6b:: illustrates the rail mounting of Fig 6a in plan view.
- Fig 7:: illustrates a branching rail or conveyer network having a single power supply and means to carry and control energy from the first-energised primary to branch conductors or powered devices like lifts.
- Fig 8: a circuit diagram showing an induction line, and a signal coil positioned in close proximity to the track.
- Fig 9:: is an illustration of one method (shorting switches) for providing power to selected segments of an automatically-guided vehicle track.
- Fig 10:: is an illustration of another method (multiple power supplies) for providing power to selected segments of an automatically-guided vehicle track.

### PREFERRED EMBODIMENTS - INTRODUCTION

The inductive-power installations on which these embodiments are based comprise at least one primary conductor, but preferably a loop of two parallel conductors laid along a defined route. The primary conductors, which carry a substantial alternating current at a high frequency are preferably made of litz wire having a total surface area capable of handling the current levels involved.

The preferred operating frequency is generally in the region of from 10 to 50 KHz, particularly reflecting limitations of the solid-state switches available - and also limitations imposed by conductor losses and radiated power, though the principles may be applicable to a much wider range of frequencies, such as from 50 Hz to 1 MHz. With higher frequencies the amount of ferromagnetic core material required in some cases becomes much smaller. Preferred embodiments have been built with operating frequencies of the order of 10 KHz and available power levels of 150W and 500W, the latter supplied at 600V and capable of energising a 200 metre length of track. Typical power supply output for large yet practical supplies is of the order of 600V AC, and typical circulating resonant currents are of the order of 70A.

Preferably the primary circuit is a resonant circuit, so that the circulating current tends to approximate a sine wave and is then substantially free of harmonics (thus minimising electromagnetic radiation and losses). The power supply needs only to maintain a circulating current but not generate or switch the total current. Inductive electric power transfer from the primary conductor(s) reaches across a void and enters into one or more secondary pickup coils, optionally with the aid of flux concentrating materials, and subsequent electric power utilization is generally but not always direct; without storage. Generally the secondary or pickup conductors will comprise resonant circuits as well.

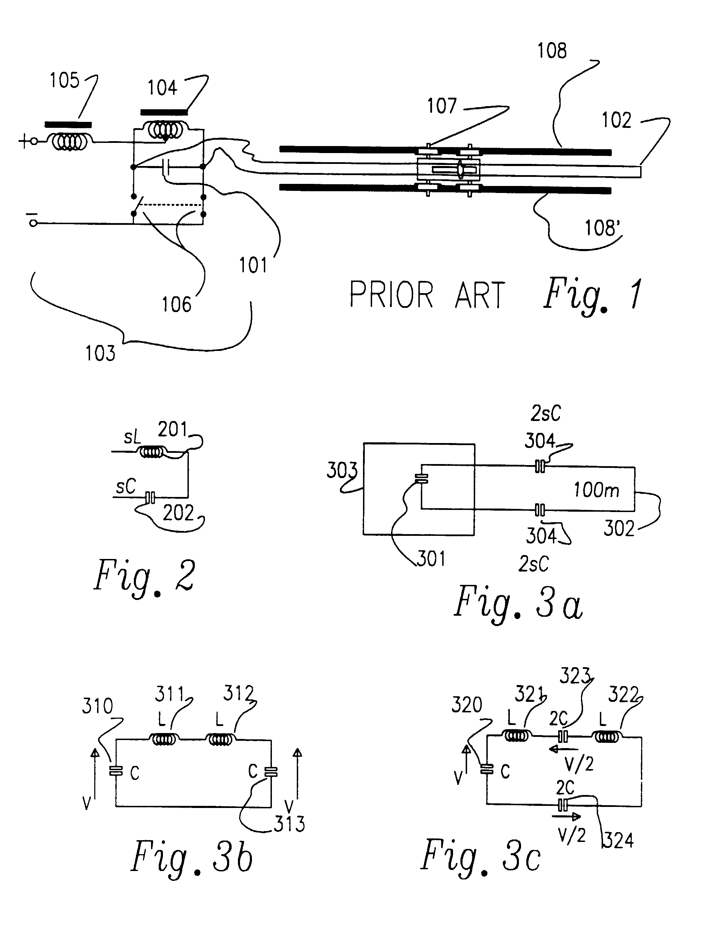

A prior-art installation (Fig 1) may comprise at least one preferably resonant primary circuit 102. In most cases the primary conductors run uninterruptedly along the designated path or track 108 taken by vehicles 107, although intermittent availability of inductive power (e.g. at declared bus stops) and intermediate energy storage within the vehicle is an alternative. A switching power supply 103 at the left of Fig 1 comprises an inductor 105 effectively providing a constant current from a voltage source, a split inductor 104 to feed power to either solid-state switch 106, (inductors 105 and 104 both having a high reactance at the operating frequency), a resonant circuit comprising the inductor and primary conductor 102 and the resonating capacitor 101. Usually, the switches are driven in a complementary mode by a zero-crossing sensor so that their action will reinforce the oscillating current detected within the resonant primary conductor 102. Note that the primary circulating current does not pass through the switches - only the "topping-up" current does. Control and protection means is not shown here, but generally operates by varying or interrupting the input voltage.

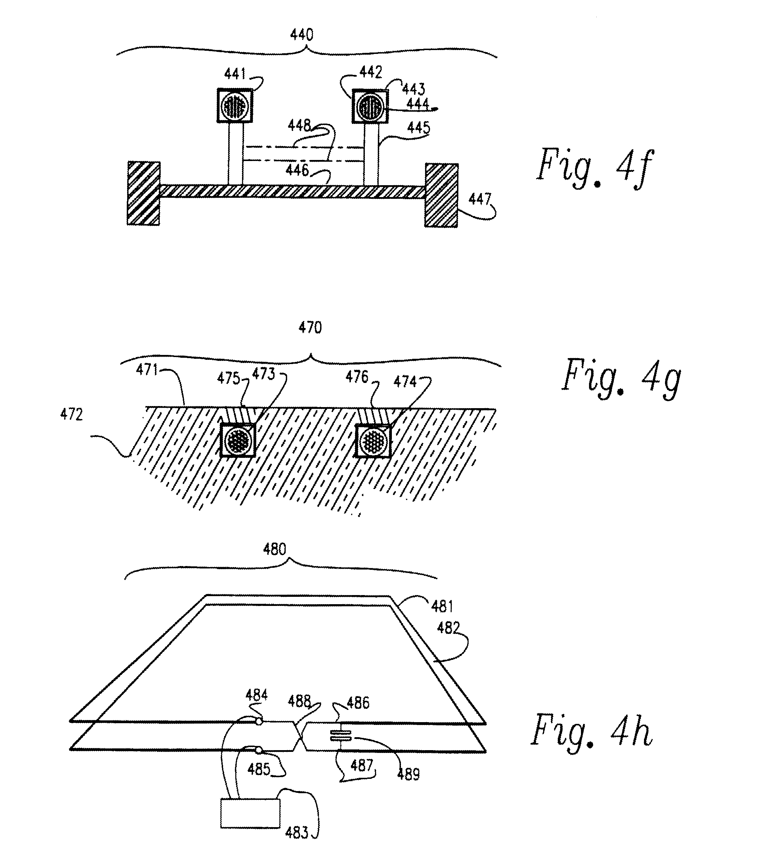

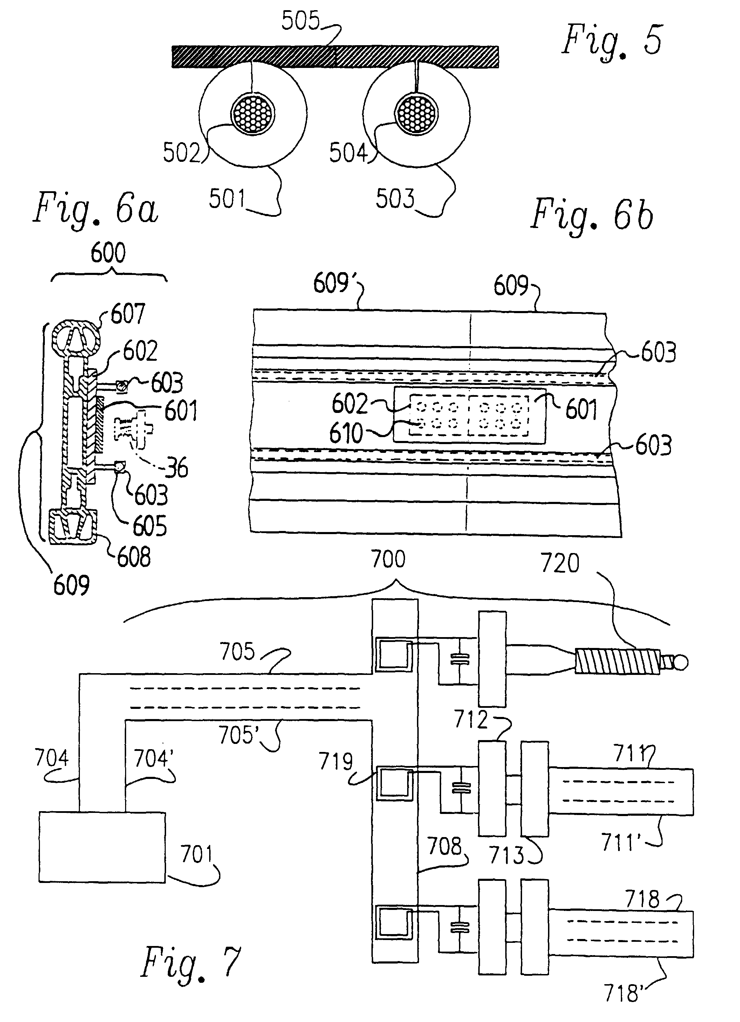

The track may be comprised of an exposed structure such as a railway track, conveyer track or monorail (Fig 4f or Fig 7), or it may be an invisible path delineated by the field emanating from one or more conductors concealed within a roadway or floor (Figs 4g, 9, and 10).

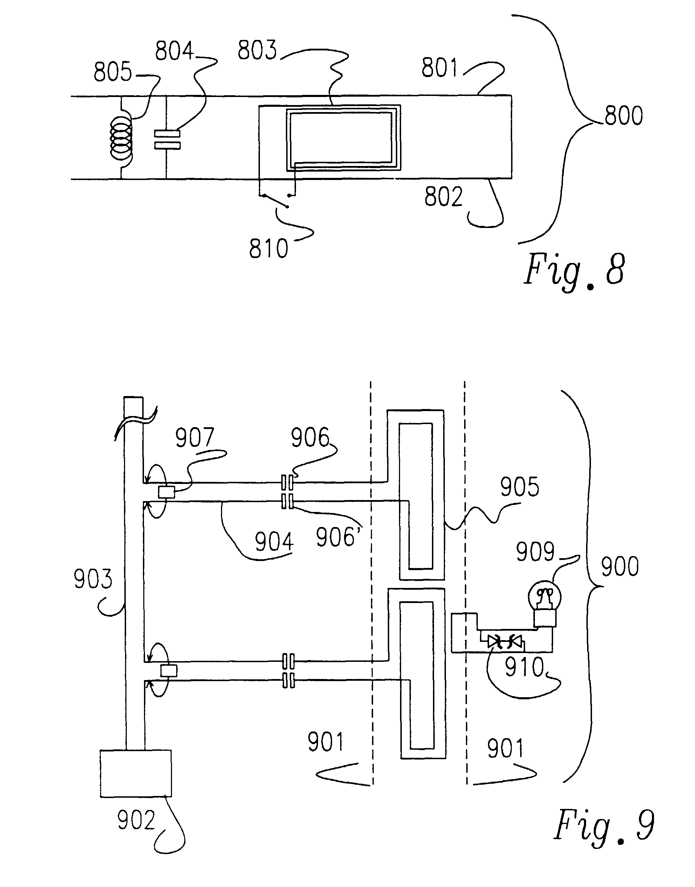

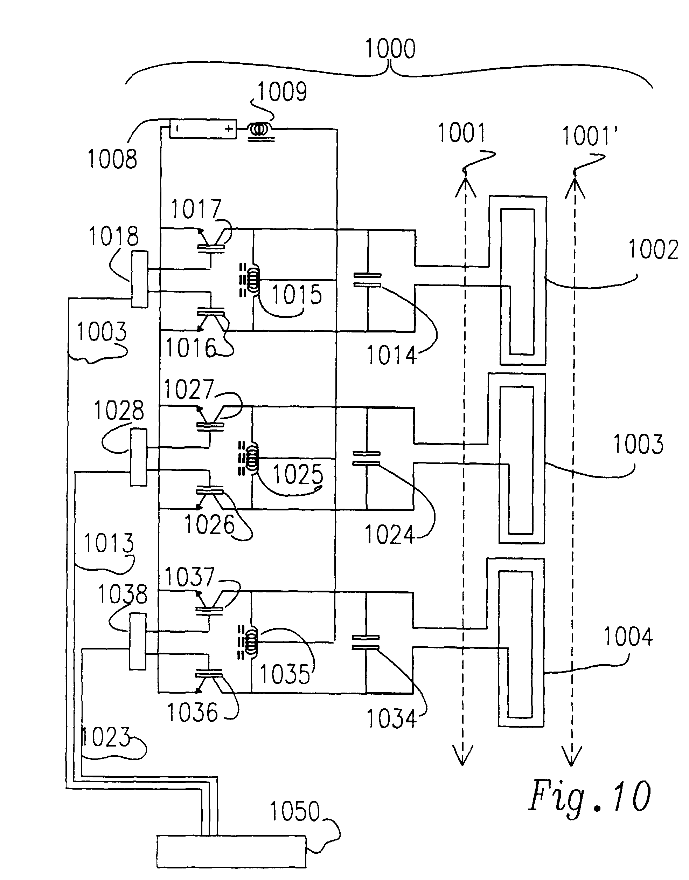

Even larger installations may be constructed by scaling up the power-handling electronics, and the number of vehicles or the motor, and motor drive circuitry on each, without departing from the novel concepts described here. Given a real voltage limit, long tracks may preferably be divided into sections; each fed from one of a number of separate power supplies. Some options for this are illustrated in Figs 9 and 10.

### PREFERRED EMBODIMENT 1 - lengthening the drivable track

Current practice in the field of resonant inductively powered loops to which these improvements are addressed generally consists of providing resonant power supplies in conjunction with single conducting loops. Typical Q values under load are about 2 or 3. Preferably a module of track (as detailed later) is about 10 to 100 metres long. Typically, module capacitors are about 1.6 microfarads, and typical inductances are about 3 microhenries per metre of track.

The distributed self-inductance of this loop is commonly used as the inductance of the resonant circuit energised by the resonant power supply placed at one end of the loop. It has been found difficult to force sufficient power into overly long purely inductive primary loops, given that present semiconductor ratings -and safety considerations - limit the voltage available to about 600V.

This preferred embodiment makes use of transmission line theory and in particular uses pi-coupling principles. This embodiment allows increases of the line length at the cost of a relatively small investment in capacitors.

An explanation of this principle (as shown in the Figures) is as follows.

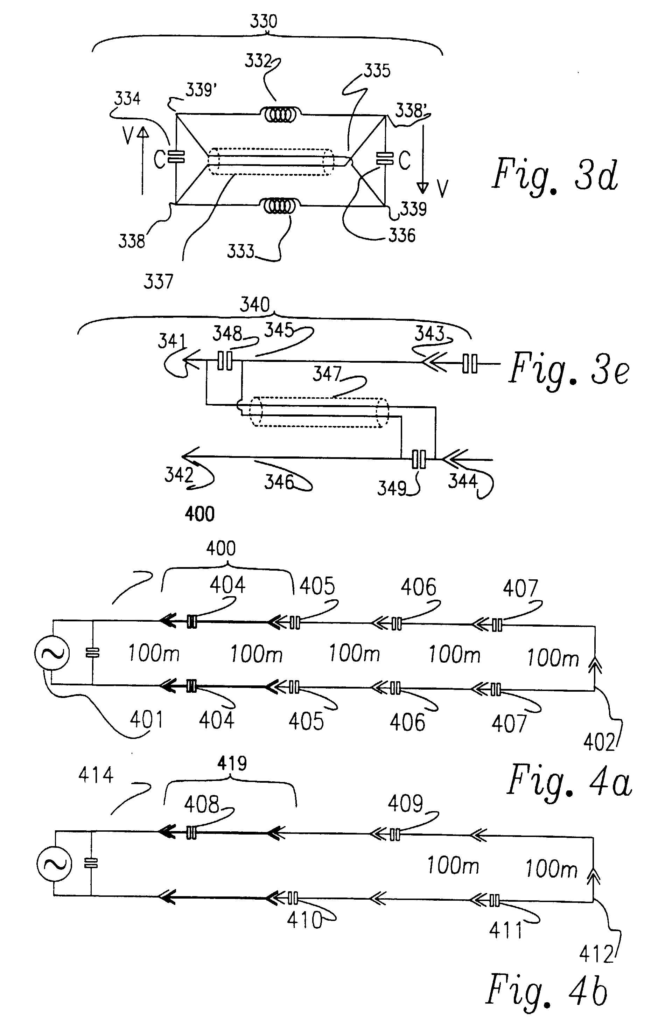

Fig 1 shows the prior-art track circuit condition. The final track circuit as in Fig 4a, is developed as follows from the simple closed loop shown in Fig 1. The simple closed loop of Fig 1, inherently having distributed inductance associated with its straight wire conductors, is functionally equivalent to the series resonant circuit as shown in Fig. 2, (a discrete inductance 201 in series with a capacitance 202), resonating at the operating frequency. Given that it is already common practice in such installations to use the distributed inductance of the conductors as the resonant inductance, it is then possible in principle to replace the short-circuit at the end of the loop with a series capacitance 313 and the inductance 312 of a further length of line (again, short-circuited at its far end) as shown in Fig 3b.

Preferably the series capacitance is placed as shown in Fig 3c in series with both sides of the conductor loop as separate units 323, 324 each of capacitance 2C in order to maintain symmetry, and also to halve the working voltage requirement of the capacitors. Preferably the added capacitance and inductance are chosen to be together resonant at the system operating frequency. This condition is illustrated in Fig 3a, where the box 303 represents a power supply for switching current alternately into either end of 301, the resonant capacitor. At approximately the position where the track would have been terminated by a short circuit, a pair of resonating capacitors 304 of value 2C have been inserted, followed by a second, substantially equal length of track 302.

Figs 3b and 3c illustrate a preferred method for achieving a lower voltage across the series capacitances. In Fig 3b, the resonant capacitor within the primary supply is 310; the voltage across it drives the track (in part indicated by the inductances 311 and 312) and substantially the same drive voltage is found across the far capacitor 313. If two series capacitors (323 and 324) are used as indicated in Fig 3c, only half the initial drive voltage is placed across each one. Fig 3c is analogous to Fig 3a, except that the distributed track inductance is explicitly drawn as the inductors 321, 322 each of value L.

It will be clear that this process of adding an open loop of conductor having a capacitor in series with each free end may be repeated a number of times, as shown in Fig 4a, (where supply 403 feeds power across a resonating capacitor 401 and then down an extended line 402 inserted in which are pairs of series capacitors 404, 405, 406, and 407), until such time as other losses (radiative, eddy-currents in adjacent structures etc, or normal use) diminish the power available below a usable level.

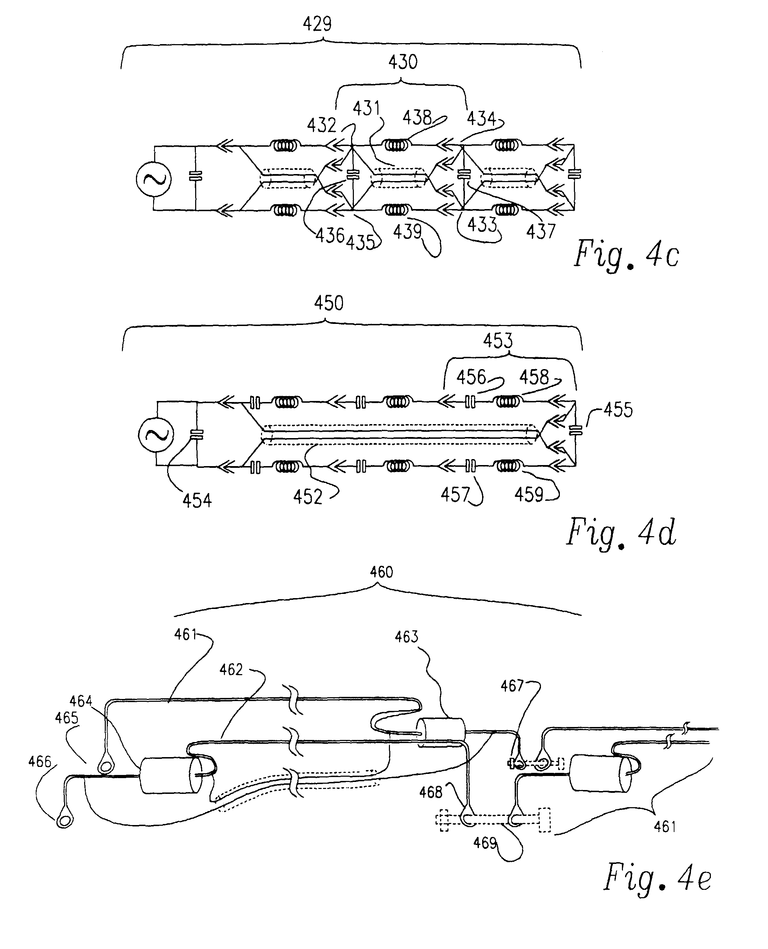

The use of added lengths of relatively long track each having a substantially fixed intrinsic inductance, capacitance, and hence a substantially preset resonant frequency is convenient from a manufacturing point of view because track may be supplied in pre-tuned modules for installation at any site. Each module (e.g. 460 in Fig 4e) comprises a mounting system and a pair of conductors 461, 462 which are capable of radiating a magnetic field. Each conductor has a series capacitor - 463 with 461, or 464 with 462 - placed at some standard position along the conductor for the sake of modularity. Terminations 465, 466, 467, 468 are provided for electrical connection with adjoining modules (e.g. 461). The connectors shown here are simple terminating lugs preferably of aluminium for bolting together (bolt; 429) though other suitable types of connector may be used.

The substrate that would usually be provided as an assembly together with the electrical components of each module is shown in Fig 4f as 445 -a standoff, supporting 442, a conductor/sheath assembly comprising insulating container 443 about a sheathed litz wire 444. A spacing web (448) may be supplied as a disposable part of each module to maintain optimal separation between conductor 442 and conductor 441. The support beam 446, 447 may or may not be supplied as part of a module, and the spacing web may be discarded after installation.

In the case of the floor version of the module for guiding and powering automatically guided vehicles, for instance, as shown in section 470 in Fig 4g, a similar spacing web to 448 may be used to determine conductor (473, 474) spacing and parallel placement (as when modules are buried in concrete 472, when the spacing web may be buried with it) or shallow trenches may be cut in parallel using a diamond saw or an equivalent in existing floors and later filled in above the conductors with filler (475, 476).

Some methods for energising modules may allow the use of several turns of cable in a self-contained loop, as shown in Figs 9 and 10, and hence a section of floor as Fig 4g would then show several turns of cable.

Ideally the example modules of Fig 4a-4e are to be supplied as factory-assembled modules having a closely similar resonant frequency ready for installation. In the likely event of a short length terminating a track) the rise in resonant frequency may be compensated for using slitted ferrite toroidal sheaths 501, 503 placed around the primary conductors 502, 504 as shown in Fig 5; each toroid of the preferred size being equivalent in inductance to a metre of track. Each toroid (501, 503) is slitted to provide an airgap and reduce saturation. A mounting plate is shown as 505. Alternatively, and especially if the capacitance is already comprised of a number of individual unit capacitors in series or in parallel, the number of capacitors used at any point in the circuit may be altered in order to maintain matching.

### PREFERRED EMBODIMENT 2 - Minimising aberrant resonant mode losses

This embodiment assumes the existence of a substantially electrically symmetrical pair of primary conductors, although its purpose is to correct for minor degrees of static or dynamic asymmetry.

One problem with systems such as that of Fig 3c, or the individual modules of track as shown in Fig 4a as 400, is that the presence of more than one inductor and more than one capacitor within a loop can allow the system to have more than one functional state, or more than one preferred frequency of resonance, which tends to cause instability. Such a system often resonates at an undesired frequency incompatible with the intended resonant frequencies of secondary coils or other modules.

Surprisingly, it has been found that a "zero-inductance" cable comprising a pair of conductors fed in opposing directions can be run beside the primary conductors over long distances, joining points of equal or similar phase and magnitude polarity by the discrete capacitors, effectively placing them in parallel and thereby restricting the possible modes of oscillation or resonance. This arrangement 330 is shown in Fig 3d, where the outer rectangle, containing alternate capacitors 334, 336 and inductors 332, 333, corresponds to the circuit of Fig 3c.

A zero-inductance cable may be defined as a cable of indefinite length comprising a preferably symmetrical pair of conductors, one of which carries current of substantially equal magnitude but opposite phase to the current in the other conductor, with the pair of conductors sharing as far as possible a common magnetic field space so that the field developed by one conductor tends to cancel out the field developed by the other conductor. Practical forms of cable include:

Lengths of litz wire in which approximately half the conductors are dedicated to connecting one or the other pair of points,
Multi-conductor insulated cables of the type used for telephone trunk cabling, which have the advantage of being colour-coded into two well-mixed but recognisable groups, or Paired insulated conductor cables of the types used as domestic power or lighting flex, such as "Trurip". Alternatively, coaxial cables wherein an outer sheath carries one sense of current while the inner conductor carries current in the other sense may be used, although these are not symmetrical cables.

In addition a length of zero-inductance cable 337 is provided. One conductor joins point 339 to point 339'; the other joins 338 to 338'. As these pairs of points are of similar polarity and magnitude, a small current only passes through the zero-inductance cable. (Its magnitude is a function of the closeness of the matching of the components in the loop, like an error current. It also reflects asymmetry of the inductive loading on the primary conductors.)

Preferably pairs of capacitors will be selected for closeness of matching at the time of assembly of modules, so that the current flowing in the zero-inductance cable is minimised, for it comprises a non-usable drain on the available resonant current for inductive power transfer.

As the circuit of Fig 3c is a closed loop, the circuit of this invention has to be slightly modified for use in modules (e.g. 400) comprising parts of an elongated primary pathway, such as that shown in Fig 4a. A preferred modification is illustrated as a circuit diagram in Fig 3e, where the module 340 comprises two sets of the basic length of conductor 345, 346 (having inductance) plus a discrete capacitor 348, 349 together with interconnections through the zero-inductance cable 347. Connectors 341, 342, 343, and 344 are for electrical connection to adjacent modules.

The use of added lengths of relatively long track each having a substantially fixed intrinsic inductance, capacitance, and hence a substantially preset resonant frequency is convenient from a manufacturing point of view because track may be supplied in pre-tuned modules for installation at any site. Consider an installation comprising a series of modules driven from one end by a generator of resonating current 401. Each module (e.g. 400 in Fig 4a or 419 in Fig 4b) comprises a mounting system for, and a pair of conductors which are capable of radiating a magnetic field and hence have an intrinsic inductance. Each conductor has a series capacitor - 404, 404, 405, 405, or 406, 406 etc - placed at some standard position along the conductor for the sake of modularity. Terminations are provided for electrical connection with adjoining modules.

Fig 4b simply shows a variant of the above in which each module 419 comprises one capacitor-less conductor and symmetry is to be maintained by alternating the capacitor-containing conductors to lie in one line or the other.

Fig 4c incorporates the zero-inductance cable 431 within one module 430 of a series forming a primary resonant circuit 429. In Fig 4c, one conductor of the cable 431 joins the node 432 with the node 433 of substantially the same phase and amplitude, while the equal-but-opposite current in the other conductor of the cable is derived from making a connection between nodes 434 and 435. Because the added cable 431 functionally approximates a zero inductance, the capacitors 436 and 437 can be tied together by a cable having substantially the same length as the inductive cables 438 and 439 yet having a smaller inductance than 438 or 439.

Fig 4d illustrates another preferred configuration for a primary inductive pathway 450, in which a single zero-inductance cable 452 joins between the primary resonant capacitor 454 and the far-end capacitor 455, skipping a number of series-capacitor modules like 453. Thus the capacitors at each end of the resonant pathway 450 are effectively one capacitor, in an electrical sense, and thus the system is constrained to a reduced number of possible resonant frequencies.

Fig 4h illustrates the special case 480 wherein the track accompanying a primary conductor 481, 482 forms a closed loop. It illustrates a short length of zero-inductance cable 488 - or even crossed-over connections - joining circuit notes 486 and 487 across a terminating capacitor 489 and the point of switching supply introduction 485 and 483. It should be noted that switching power supplies 483 of this invention include a resonating capacitor - as shown for example in Fig 10 as 1014 or 1024 or 1034.

### PREFERRED EMBODIMENT 3 - Minimising induced-field losses

Losses in adjacent ferromagnetic structures detract from the maximum path length, waste energy, and may induce hazardous currents or temperatures. Figure 6a, 6b illustrate a rail mounting in plan view (6b) and cross section (6a). Conductors 603 are mounted on aluminium I-beams 609. The rail mounting 609 preferably comprises an extruded beam having a general I-section configuration with an enlarged head 607 and foot 608 section for structural strength. Abutting sections of the rail mounting beams 609 against 609' are joined by a steel fish plate 602 which is covered and protected from alternating magnetic fields by an aluminium plate 601, fastened with bolts 610. Some of the alternating magnetic field radiated by the primary conductors 603 running inside their insulating ducts 605 and supported by the I-beam of aluminium 607 comprising the conveyer rail 609 may be dissipated as eddy currents, and more particularly as hysteresis, in conductive ferromagnetic (i.e. iron or steel) items (e.g. fish plate 602) lying within the field. As ferromagnetic items tend to concentrate flux lines they enhance this effect.

It has been found that the application of a conductive cover or sheath 601, formed from (for example) 3 mm thick aluminium sheet - although copper or other conductors may be used - over such items has the effect of protecting ferromagnetic items from exposure to magnetic fields, and thereby reduces the dissipation of energy.

### PREFERRED EMBODIMENT 4 - Distributing current into branches

Figure 7 illustrates a rail network 700 transferring high-frequency AC power from a trunk or busbar set of primary conductors 708 to other sets. This type of configuration is applicable to conveyer installations where devices such as switching points, lifts, etc require substantial amounts of energy and it is convenient to supply this energy from the resonant primary conductors.

Power from a principal power source 701 is directed along conducting wires (all preferably made of litz wire) 704, 704, mounted adjacent to weight-bearing rails 705,705. Sets of rails 705, 705' are linked to other rails 715, 715' by a main electrical power supply bus or duct 708. This may in fact comprise a set of primary conductor modules (as 420 in Fig 4b) with the additional purpose of radiating an alternating magnetic field. A power control or modulation box 712 is mounted adjacent to rails and energises the resonant conductor 711, 711. Control box 713 may similarly be provided between the main supply bus 708 and a conductor 718, 718'. Transformers 719 may also be used for power coupling - for isolation purposes (as magnetic breaks) or to step a voltage up or down.

### PREFERRED EMBODIMENT 5 - Ancillary coils beside the primary conductors

Figure 8 illustrates an ancillary signal loop or coil module 803 associated with an induction line, having as its primary conductors a pair of litz wire cables 801 and 802, and a resonating capacitor 804, with the ancillary coil 803 magnetically coupled to the primary conductors. It will be appreciated that the induction line may also have other capacitors and/or inductors as described in earlier embodiments.

Ancillary coil module 803 can be used to detect the position of an object, especially one including a resonant secondary circuit, as it moves along the track. By measuring the voltage developed within the coil 803, it is possible to detect when a movable body powered via a secondary pick-up coil passes the ancillary coil. When such a vehicle overlies the coil, the voltage in the coil will increase. The coil 803 preferably has a switch 810, so that the ancillary coil can be switched between a closed circuit state and an open circuit state. The vehicle can be stopped at this point by closing the switch 810, to short circuit the coil, and thus withdraw power from the coil providing power to the vehicle. It is also possible to modulate closure of the switch 810, so that a generated signal can pass from the ancillary coil 803 - now a signal coil - to the trolley. Only one such signal coil is shown in Figure 8, but such coils can be provided at a number of predetermined intervals or positions along the track.

### PREFERRED EMBODIMENT 6 - Disabling unoccupied segments

This embodiment (Fig 9) and that of Fig 10 are intended to minimise the amount of the alternating magnetic field radiated from the primary conductor into a general area. In these examples individual modules of the series making up the primary conductive path may be separately and specifically energised by a controller, when a nearby power consumer is active.

There are strict safety standards covering magnetic field radiation in many countries, which may easily be breached by an installation providing sufficient power to energise a vehicle having a useful capacity. The solutions of this invention apply particularly to automatically guided vehicles (AGVs) receiving their power from primary conductors concealed within the floor of a roadway or warehouse, and thus providing magnetic fields more liable to intersect human flesh than are fields from an overhead conveyer. The safety standards would have equal importance for a roadway where inductive power transfer is used to power passenger vehicles and the like. Further advantages of minimising the radiated field include greater efficiency because a smaller area is filled with the alternating magnetic field than if an entire track was to be activated all the time.

The underlying principle of this solution is to divide the entire route or track into short modular segments, each being comparable to or not much greater than the length of a typical passenger vehicle or automatically guided vehicle (AGV), and energise each segment only when necessary. With any potential vehicle/person interaction there is a minimum safe approach distance as set by the risk of collision, particularly in the forward direction. A track segment may defined as the sum of a safety distance plus the vehicle length itself. The invention is nevenheless equally applicable if the segment distance is set without reference to the above length-determining factors.

As a further and independent safety provision, localised optical or auditory warnings (such as a melody, a horn, a buzzer, flashing lights, etc) indicating that the adjacent segment of the track has become energised may be used, so that any segment powering system is relatively fail-safe. One preferred method is simply to use some of the circulating energy to run a filament or fluorescent lamp 909 - via a magnetic coupling. Over-voltage protection such as by varistors or zener diodes 910 is preferred, in order to trap energy transients. An arrangement of buried fluorescent lamps beneath a translucent or transparent cover, running among the length of the trackway and illuminated when the surrounding segments are energised is a graphical way of warning personnel of a radiating segment.

Surprisingly it is not impractical to switch a segment of a main resonant loop in or out of service by shorting it. Although the typical power in the resonant circuit is perhaps 50A to 70A @ 600V, de-energised segments may be shorted out so that they are bypassed and the circulating power in a shorted segment dies away quickly.

A diagram of this preferred embodiment is shown as Fig 9, where 900 indicates a section of an AGV route 901. A series of selectively energisable loops (only two are illustrated and one is indicated as 905) is laid along a track along which vehicles are to travel. These vehicles are energised by inductive means using power from a suitable power supply 902 fed along a trunk pair of conductors 903. At intervals, one conductor (or the other) is interrupted by a branch 904, which feeds the corresponding loop 905 via series capacitors, 906. A shorting switch 907 is placed at or near the junction of the branch with the trunk. This diagram does not show control means to cause operation of the shorting switch 907; examples of such means are (a) a demand signal from the AGV picked up by adjacent sensors, (b) changes in load in the loop 905 as detected by means of small test currents passed by the shorting switch 907. The diagram does not show means to detect the presence of an AGV and cause segment switching to occur; nor does it illustrate safety means to directly indicate energisation of a track segment; such means may include lamps driven by pickup of current from the loop, or horns, buzzers, or other audio warning devices.

It will be appreciated that a shorting switch approach is suitable for situations in which the branches are placed in series with the main conducting loop 903; in that a resonant current circulates in the entire loop and may be used for the simultaneous powering of more than one module or segment.

Under this system the resulting magnetic field may be reinforced by overlaying several turns of the cable, thus multiplying the alternating magnetic field generated while retaining a lower current in the distribution section of the primary conductor. The number of turns used can be varied from segment to segment according to the anticipated average loading on the passenger vehicle or AGV above each segment, so long as the total available power limitations are borne in mind.

Magnetic shielding or physical distancing of the distribution sections of the primary conductor from walkways helps to maintain low magnetic fields in any occupied spaces.

When a shorting switch is opened, a load peak transient may be expected to occur until resonating current has built up in the newly added branch. On closure, little effect may be observed in the main conductors, while the resonating current will die away in time. The capacitors 906, 906' provide for resonance within the shorted branch 905 alone. These transients may be seen at the power supply whenever segments are shorted or opened, especially under fault conditions, and suitable protection of the power supply is required.

Preferably the shorting switch is a device which switches on or off "softly" so that resonating currents either build up or decay more slowly. The shorting switch may be a bidirectional pair of IGBT devices, a "TRIAC" or some other suitable solid-state switch. The gradual build-up or decay of the resonant current is preferably caused by operating the switch in a mode whereby it is closed for a falling or rising proportion of complete cycles respectively, so that zero-crossing switching occurs (to minimise transients) and harmonic distortion is minimised.

A preferred operation mode which overcomes a likely transient protection problem and which also provides a soft start effect is to momentarily switch off the power supply feeding the entire track and attached segments a short time before changing segments, wait until the resonant current has died away, perform the segment switching operations, and then re-energise the main power supply. Typical time delays are of the order of a few milliseconds only.

### PREFERRED EMBODIMENT 7 - separate switching power supply for each segment.

This is illustrated in Fig 10. As for the previous embodiment, the entire route or track (1001, 1001') is conveniently divided into short segments; each similar in length to the length of a vehicle plus an optional safety distance. An example of segment length is 10m, though any specific figure is of course an example. Here three (1001x, 1002x, 1003x) of an indefinitely large number of energisable segments are shown. Again, no relationship to vehicle length need be imposed.

Each segment is energised when usage is likely. Preferably a central controller 1050 detects (and may control) the motion of an AGV or other power consumer along the track and enables a corresponding one of the switching controllers 1018, 1028, or 1038 via a control line 1023 so that the resonant power supply powers the associated segment. Other segments remain unenergised, with both controller switches (such as 1016 - 1017) in an open state although resonating currents may be induced within the LC circuit by mutual coupling at adjacent coil ends, particularly in the presence of the vehicle. Warning systems with (for example) lamps like 909 may be provided, as described in the previous embodiment.

Alternatively a series of local controllers replacing controller 1050 may be used in conjunction with a single supply bus to locally detect a demand in a particular segment, close a switch connected to a bus, and energise the resonant circuit in response.

Each module, comprising a length of track, a resonant capacitor and a switching power supply is connected via a bus cable to a constant-current source (here depicted as a constant-voltage battery 1008 and a constant-current-providing inductance 1009 having relatively high reactance at the operating frequency). An un-illustrated option is to use a separate constant-current-providing inductance 1009 to each switching power supply, in order to run more than one switching power supply at one time from the DC power source.

Each power supply is capable of developing and maintaining a resonant high-frequency current within the corresponding segment of track. Preferably about five turns of a litz wire cable is laid as a coil, elongated along the course taken by the AGV or other vehicle. This might be buried as shown in Fig 4d. In use, initiation of a resonant current will be aided by an existing resonating current induced either from an adjacent loop or from the secondary coil of the AGV. As for the previous embodiment, the rise and decay of resonating currents are of relatively long duration - several milliseconds.

Surprisingly, there are many advantages to providing a separate power supply for each module. Problems of providing adequate high-frequency resonating power along long lengths of track are minimised, thus reducing the output voltage requirements of any power supply. Problems relating to installation are minimised, since in most cases a series of pre-packaged and pre-aligned identical units may be installed. The use of several (e.g. 5) turns of conductor at each segment reduces the peak current requirements. The relatively expensive parts of the power system such as the inductor 1009 need not be replicated - and now have a lower current requirement. Costs are reduced by mass-production of identical units, by simplified installation, and as a result of replacing the segment switches. System reliability is raised owing to inherent redundancy - one large supply is replaced by a number of smaller, lower power supplies.

Finally, it will be appreciated that various alterations and modifications may be made to the foregoing without departing from the scope of this invention as set forth in the following claims.

## Claims

1. A primary inductive pathway (429) for a resonant inductive power distribution system, said pathway being capable of connection to a source of power capable of generating alternating current at a system frequency;
wherein:
said pathway has a resonant frequency compatible with a said system resonant frequency;
characterised in that
said pathway comprises at least two primary conductor modules (460) each having a resonant frequency compatible with the system resonant frequency;
wherein each said primary conductor module (430) comprises a first and a second conducting means (461,462) mounted in parallel and spaced apart configuration;
and wherein:
each conducting means (461,462) of each said module (460) has connection means capable of connection to adjoining conducting means within adjacent primary conductor modules (460) so that a number of modules can be joined together to form a longer primary inductive pathway;
and each said primary conductor module includes at least one resonating capacitor (463,464) connected in series with respective conducting means.

2. A primary inductive pathway for a resonant inductive power distribution system as claimed in claim 1, characterised in that in each primary conductor module the first conducting means (461) is connected to the second conducting means (462) within the module so that the module comprises a closed, elongated loop having a loop conductor and two electrical connections (465,466).

3. A primary inductive pathway as claimed in claim 2, characterised in that in each primary conductor module the loop conductor (461,462) is connected to loop energising means (401), comprising a controllable discrete power supply (902) capable of converting electricity into a high-frequency resonant current, the power supply being controlled so that when there is no demand for inductive power from the loop, the power supply is off.

4. A primary inductive pathway as claimed in claim 2, characterised in that each primary conductor module the loop conductor (461,462) is connected to loop energising means (905), comprising controllable switching means (907) connected between the two electrical connections at the origin of the loop, thereby providing a bypass route for high-frequency resonant current applied to the two electrical connections, so that when there is no demand for inductive power from the loop, the switching means is closed.

5. A primary inductive pathway for a resonant inductive power distribution system as claimed in claim 1, characterised in that the first and second conducting means (461,462) are mounted in parallel, spaced-apart configuration and thereby form an open-ended, elongated loop having an electrical connection at each end of each conducting means, so that a chain of adjoining modules may be joined together in series and energised as a whole by a resonant power supply (902).

6. A primary inductive pathway for a resonant inductive power distribution system as claimed in claim 5, characterised in that resonance-constraining means is provided to electrically link spaced-apart nodes of the circuit otherwise having similar phase and amplitude so that the tied-together nodes are held more closely to the same phase and amplitude.

7. A primary inductive pathway for a resonant inductive power distribution system as claimed in claim 6 characterised in that the resonance-constraining means comprises a zero-inductance cable (337,431,452,488), itself comprising at least two groups, each electrically connected in parallel, of one or more parallel conductors insulated from one another and closely spread so that the magnetic fields produced by currents within any one group tend to be opposed by magnetic fields produced by currents flowing in the opposite sense within the other group.

8. A primary inductive pathway for a resonant inductive power distributions system as claimed in claim 7 characterised in that the zero-inductance cable (337,431,452,488) links capacitors in adjacent modules (460).

9. A primary inductive pathway for a resonant inductive power distribution system as claimed in claim 8 characterised in that the zero-inductance cable (337,431,452,488) links capacitors in non-adjacent modules (460).

10. A primary inductive pathway as claimed in claim 4, characterised in that there is control means capable of interrupting the main power supply to the trunk line for a predetermined period of time, and changing the state of one or more of the shorting switches (907) during this period of time to restrict the energised portions of the conductive pathway.

11. A primary inductive pathway as claimed in claim 1 having ferro-magnetic elements (602) exposed to magnetic fields on or about the substrate, characterised in that said ferro-magnetic elements are shielded by a conductive sheath (601).

## Patentansprüche

1. Primäre Induktivbahn (429) für ein resonantes induktives Energieverteilungssystem, wobei die Bahn an eine Stromquelle angeschlossen werden kann, welche Wechselstrom mit einer Systemfrequenz erzeugen kann;
wobei:
die Bahn eine Resonanzfrequenz hat, die mit der genannten Systemresonanzfrequenz kompatibel ist;
dadurch gekennzeichnet, daß
die besagte Bahn mindestens zwei primäre Leitmodule (460) enthält, die jeweils eine Resonanzfrequenz haben, welche mit der Systemresonanzfrequenz kompatibel ist;
wobei jedes besagte primäre Leitmodul (430) eine Erst- und eine Sekundärleitvorrichtung (461, 462) umfaßt, die parallel und in einem Abstand voneinander angeordnet sind:
wobei ferner:
jede Leitvorrichtung (461, 462) jedes besagten Moduls (460) über eine Verbindungsvorrichtung verfügt, mit der eine Verbindung mit einer benachbarten Leitvorrichtung innerhalb der primären Leitmodule (460) hergestellt werden kann, so daß eine Reihe von Modulen miteinander verbunden werden kann, um eine längere primäre Induktivbahn zu bilden;
und jedes primäre Leitmodul mindestens einen resonierenden Kondensator (463, 464) enthält. der mit jeweiligen Leitvorrichtung in Serie geschaltet ist.

2. Primäre Induktivbahn für ein resonantes induktives Energieverteilungssystem nach Anspruch 1, dadurch gekennzeichnet, daß die erste Leitvorrichtung (461) in jedem primären Leitmodul mit der zweiten Leitvorrichtung (462) innerhalb des Moduls verbunden ist, so daß das Modul eine geschlossene längliche Schlaufe umfaßt, die eine Schlaufenleiter und zwei elektrische Verbindungen (465, 466) enthält.

3. Primäre Induktivbahn nach Anspruch 2, dadurch gekennzeichnet, daß der Schlaufenleiter (461, 462) in jedem primären Leitmodul mit einer Schlaufenerregervorrichtung (401) verbunden ist, die eine steuerbare separate Stromquelle (902) enthält, welche Elektrizität in einen Hochfrequenzresonanzstrom umwandeln kann, wobei die Stromquelle so gesteuert werden kann, daß die Stromversorgung abschaltet, wenn keine Nachfrage nach induktiver Energie von der Schlaufe besteht.

4. Primäre Induktivbahn nach Anspruch 2, dadurch gekennzeichnet, daß der Schlaufenleiter (461, 462) in jedem primären Leitmodul mit einer Schlaufenerregervorrichtung (905) verbunden ist, die eine steuerbare Schaltervorrichtung (907) enthält, welche zwischen den zwei elektrischen Verbindungen am Schlaufenbeginn verbunden sind und damit eine Umgehungsroute für den.auf die zwei elektrischen Verbindungen aufgetragenen Hochfrequenzresonanzstrom bieten, so daß die Schaltvorrichtung geschlossen ist, wenn keine Nachfrage nach induktiver Energie von der Schlaufe besteht.

5. Primäre Induktivbahn für ein resonantes induktives Energieverteilungssystem nach Anspruch 1, dadurch gekennzeichnet, daß die erste und zweite Leitvorrichtung (461, 462) parallel in einem Abstand voneinander angeordnet sind und damit eine offene längliche Schlaufe bilden, die an jedem Ende jeder Leitvorrichtung eine elektrische Verbindung hat, so daß eine Kette von benachbarten Modulen in Serie miteinander verbunden und insgesamt von einer resonanten Stromquelle (902) erregt werden kann.

6. Primäre Induktivbahn für ein resonantes induktives Energieverteilungssystem nach Anspruch 5, dadurch gekennzeichnet, daß eine resonanzbegrenzende Vorrichtung vorgesehen ist, mit der die auseinander liegenden Knoten des Stromkreises, die ansonsten gleiche Phasen und Amplituden haben, elektrisch verbunden werden, so daß die miteinander verbundenen Knoten enger auf dieselbe Phase und Amplitude eingegrenzt werden.

7. Primäre Induktivbahn für ein resonantes induktives Energieverteilungssystem nach Anspruch 6, dadurch gekennzeichnet, daß die resonanzbegrenzende Vorrichtung ein Nullinduktanzkabel (337, 431, 452, 488) aufweist, welches seinerseits mindestens zwei Gruppen aufweist, von denen jede elektrisch parallel verbunden ist und aus einem oder mehreren parallelen Leitern besteht, die voneinander isoliert sind und nah beieinander liegen, so daß die von den Strömen innerhalb einer Gruppe erzeugten magnetischen Felder normalerweise magnetischen Feldern gegenüberliegen, die von den in der anderen Gruppe in die andere Richtung fließenden Strömen erzeugt werden.

8. Primäre Induktivbahn für ein resonantes induktives Energieverteilungssystem nach Anspruch 7, dadurch gekennzeichnet, daß das Nullinduktanzkabel (337, 431, 452, 488) Kondensatoren in benachbarten Modulen (460) verbindet.

9. Primäre Induktivbahn für ein resonantes induktives Energieverteilungssystem nach Anspruch 8, dadurch gekennzeichnet, daß das Nullinduktanzkabel (337, 431, 452, 488) Kondensatoren in nicht benachbarten Modulen (460) verbindet.

10. Primäre Induktivbahn nach Anspruch 4, dadurch gekennzeichnet, daß eine Steuerungsvorrichtung besteht, die die Hauptstromversorgung zur Hauptleitung für eine bestimmte Zeitspanne unterbrechen und den Zustand von einem oder mehreren Kurzschlußschaltern (907) in dieser Zeit verändern kann. um die erregten Teile der Induktbahn zu begrenzen.

11. Primäre Induktivbahn nach Anspruch 1, die ferromagnetische Elemente (602) hat, die magnetischen Feldern auf oder um das Substrat ausgesetzt sind, dadurch gekennzeichnet, daß besagte ferromagnetische Elemente von einem Leitmantel geschützt sind (601).

## Revendications

1. Chemin inducteur primaire (429) pour système de distribution d'énergie inductrice résonnante, ledit chemin pouvant être relié à une source d'énergie capable de générer un courant alternatif à une fréquence de système;
où
ledit chemin a une fréquence résonnante compatible avec une fréquence résonnante dudit système,
caractérisé en ce que
ledit chemin comprend au moins deux modules conducteurs primaires (460) ayant chacun une frequence résonnante compatible avec la fréquence résonnante du système;
où chacun desdits modules conducteurs primaires (430) comprend un premier et un deuxième moyen conducteur (461, 462) disposés en configuration parallèle et écartés l'un de l'autre;
et où
chaque moyen conducteur (461. 462) de chacun desdits modules (460) comporte un moyen de connexion à un moyen conducteur contigu se trouvant dans des modules conducteurs primaires adjacents (460), de sorte qu'un certain nombre de modules peuvent être reliés l'un à l'autre pour réaliser un chemin inducteur primaire plus long;
et chacun desdits modules conducteurs primaires est muni d'au moins un condensateur résonnant (463, 464) relié en série au moyen conducteur correspondant.

2. Chemin inducteur primaire pour système de distribution d'énergie inductrice résonnante selon la revendication 1, caractérisé en ce que dans chaque module conducteur primaire le premier moyen conducteucr (461) est relié au deuxième moyen conducteur (462) dans l'intérieur du module, de sorte que le module comprend une boucle allongée fermée ayant un conducteur boucle et deux connexions électriques (465, 466).

3. Chemin inducteur primaire selon la revendication 2, caractérisé en ce que dans chaque module conducteur primaire le conducteur en boucle (461, 462) est connecté à un moyen (401) d'excitation de la boucle, qui comprend une source d'énergie (902) séparée réglable et capable de convertir de l'électricité en un courant résonnant haute fréquence, la commande de l'électricité étant assurée de façon à la mettre hors de circuit en l'absence d'une demande à la boucle d'énergie inductrice.

4. Chemin inducteur primaire selon la revendication 2, caractérisé en ce que dans chaque module conducteur primaire le conducteur boucle (461, 462) est relié à un moyen d'excitation de la boucle (905) qui comprend un moyen de commutation (907) réglable, relié entre les deux connexions électriques situées à l'origine de la boucle, assurant ainsi une route d'évitement pour un courant résonnant haute fréquence appliqué aux deux connexions électriques, de sorte que le moyen de commutations se ferme en l'absence d'une demande à la boucle d'énergie inductrice.

5. Chemin inducteur primaire pour système de distribution d'énergie inductrice résonnante selon la revendication 1, caractérisé en ce que le premier et le deuxième moyen conducteur (461, 462) sont disposés en configuration parallèle, écartés l'un de l'autre, réalisan ainsi une boucle allongée ouverte ayant une connexion életrique à chaque extrémité de chaque moyen conducteur, permettant de lier en série une chaîne de modules contigus, le tout pouvant être excité par une source d'énergie résonnante (902).

6. Chemin inducteur primaire pour système de distribution d'énergie inductrice résonnante selon la revendication 5, caractérisé en ce qu'un moyen de limitation de résonance est prévu pour lier électriquement des noeuds du circuit, écartés les uns des autres, étant par ailleurs de phase et d'amplitude pareille, de sorte que les noeuds liés entre eux tiennent plus de près la même phase et la même amplitude.

7. Chemin inducteur primaire pour système de distribution d'énergie inductrice selon la revendication 6, caractérisé en ce que le moyen de limitation de résonance comprend un câble à inductance zéro 337, 431, 452, 488) comprenant lui-même au moins deux groupes, chacun relié électriquement en parallèle, d'un ou plusieurs conducteurs parallèles isolés l'un de l'autre et espacés court intervalle de sorte que les champs magnétiques produits par des courants dans l'un quelconque des groupes ont tendance à être opposés par les champs magnétiques issus de courants qui coulent en sens contraire dans un autre groupe.

8. Chemin inducteur primaire pour système de distribution d'énergie inductrice selon la revendication 7, caractérisé en ce que le câble à inductance zéro (337, 431, 452, 488) lie des condensateurs dans des modules contigus (460).

9. Chemin inducteur primaire pour système de distribution d'énergie inductrice selon la revendication 8, caractérisé en ce que le câble à inductance zéro (337, 431, 452, 488) liee des condensateurs dans des modules non contigus (460).

10. Chemin inducteur primaire selon la revendication 4, caractérisé en ce qu'il est prévu un moyen de commande permettant l'interruption, pendant un laps de temps prédéterminé, de l'alimentation principale en énergie allant à la ligne principale, ainsi que le changement d'état d'un ou plusieurs commutateurs de court-circuitage (907) pendant ce laps de temps en vue de limiter les parties excitées du chemin inducteur.

11. Chemin inducteur primaire selon la revendication 1 ayant des éléments ferromagnétiques (602) exposés à des champs magnétiques sur ou autour du substrat. caractérisé en ce que lesdits éléments magnétiques sont protégés par un manchon conducteur (601).
